# EUROPÄISCHE PATENTSCHRIFT

(11) **EP 3 243 688 B1**
(45) Veröffentlichungstag und Bekanntmachung des Hinweises auf die Patenterteilung: **25.12.2019**
(21) Anmeldenummer: 17157075.7
(22) Anmeldetag: 21.02.2017
(51) Int. Cl.: B60K 37/06, B60K 35/00, B60K 37/02

(54) **VERFAHREN UND VORRICHTUNG ZUM ZUORDNEN VON STEUERBEFEHLEN IN EINEM FAHRZEUG SOWIE FAHRZEUG**
METHOD AND DEVICE FOR THE ALLOCATION OF CONTROL COMMANDS IN A VEHICLE, AS WELL AS VEHICLE
PROCÉDÉ ET DISPOSITIF D'ATTRIBUTION D'INSTRUCTIONS DE COMMANDE DANS UN VÉHICULE AUTOMOBILE ET VÉHICULE AUTOMOBILE

(30) Priorität: 07.04.2016 DE 102016205797
(43) Veröffentlichungstag der Anmeldung: 15.11.2017
(73) Patentinhaber: Robert Bosch GmbH, 70442 Stuttgart (DE)
(72) Erfinder: Mangin, Benoit, 70563 Stuttgart (DE)

(56) Entgegenhaltungen:
- DE-A1-102012 215 407
- DE-A1-102013 015 634
- US-A1- 2015 234 459

## Beschreibung

### Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

In modernen Fahrzeugen steigt die Anzahl an Funktionen, die ein Insasse des Fahrzeugs nach eigenen Wünschen und Bedürfnissen manuell steuern und einrichten kann, kontinuierlich an.

Aus der DE 10 2012 215 407 A1 ist ein Verfahren zum Bereitstellen einer Eingabe für ein Bedienelement aus einer Mehrzahl von Bedienelementen bekannt.

Aus der US 2015/0234459 A1 ist ein Verfahren zum Verändern einer Information auf einem Display in einem Fahrzeug abhängig von einer Blickrichtung eines Fahrers bekannt.

Aus der DE 10 2013 015 634 A1 ist ein Verfahren und ein System zum Betreiben wenigstens einer Anzeigeeinrichtung eines Kraftwagens bekannt.

### Offenbarung der Erfindung

Vor diesem Hintergrund werden mit dem hier vorgestellten Ansatz ein Verfahren zum Zuordnen von Steuerbefehlen in einem Fahrzeug, weiterhin eine Vorrichtung, die dieses Verfahren verwendet, ein Fahrzeug sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Unter Verwendung einer Insassenblickinformation, die einen Blick eines Insassen eines Fahrzeugs auf eine zu steuernde Einrichtung des Fahrzeugs repräsentiert, können Steuerbefehle zumindest einer ersten und/oder einer einer zweiten Steuereinrichtung des Fahrzeugs der zu steuernden Einrichtung zugeordnet werden.

Gemäß dem hier vorgestellten Ansatz kann ein und dieselbe Steuereinrichtung zur Steuerung unterschiedlicher Systeme im Fahrzeug verwendet werden. Beispielsweise kann ein in ein Lenkrad des Fahrzeugs integriertes Scrollrad zur Steuerung entweder des Kombiinstruments oder des zentralen Bedien- und Anzeigeelements im Fahrzeug verwendet werden. Alternativ kann z. B. ein Drehknopf in der Mittelkonsole des Fahrzeugs zum gleichen Zweck eingesetzt werden. Dies ermöglicht einem Fahrzeuginsassen, z. B. dem Fahrer, eine größere Flexibilität bei der Interaktion mit dem Fahrzeug. So kann er beispielsweise, wenn er die Hände am Steuer hat, das Scrollrad benutzen, ohne nach dem Drehknopf greifen zu müssen. Wenn hingegen sein rechter Arm auf der Armstütze ruht, ist es für ihn möglicherweise angenehmer, für die Bedienung nach dem Drehknopf zu greifen.

Es wird ein Verfahren zum Zuordnen von Steuerbefehlen in einem Fahrzeug vorgestellt, wobei das Verfahren die folgenden Schritte aufweist:
einlesen einer Insassenblickinformation über eine Schnittstelle zu einer Insassenerfassungseinrichtung des Fahrzeugs, wobei die Insassenblickinformation einen Blick eines Insassen des Fahrzeugs auf eine zu steuernde Einrichtung des Fahrzeugs repräsentiert; und
wahlweise zuordnen eines Steuerbefehls einer ersten Steuereinrichtung des Fahrzeugs und/oder eines Steuerbefehls einer zweiten Steuereinrichtung des Fahrzeugs zu der Einrichtung unter Verwendung der lnsassenblickinformation, um die Einrichtung wahlweise mit der ersten Steuereinrichtung oder der zweiten Steuereinrichtung zu steuern.

Die Insassenerfassungseinrichtung kann sich in einem Innenraum des Fahrzeugs befinden und eine Kamera aufweisen, die auf einen Kopf des Insassen gerichtet ist. Bei dem Insassen kann es sich um einen Fahrer des Fahrzeugs handeln. Die Insassenblickinformation kann auf Daten einer Erfassung von Augen und Kopf des Insassen durch die Kamera aufgebaut sein. Die zu steuernde Einrichtung kann beispielsweise einem Kombiinstrument, einer Fahrerassistenz oder einem Infotainmentsystem des Fahrzeugs zugeordnet sein. Unter den Steuereinrichtungen können manuell betätigbare elektrische Betriebsmittel des Fahrzeugs wie Schalter, Taster, Knöpfe, etc. verstanden werden. Die Steuerbefehle können in Form von elektrischen Signalen vorliegen und durch manuelles Betätigen der Steuereinrichtungen durch den Insassen erzeugt werden.

Dieses Verfahren kann beispielsweise in Software oder Hardware oder in einer Mischform aus Software und Hardware beispielsweise in einem Steuergerät implementiert sein.

Gemäß einer Ausführungsform weist das Verfahren einen Schritt des Generierens der Insassenblickinformation unter Verwendung einer Blickrichtungsinformation und/oder einer Kopfhaltungsinformation eines optischen Sensors der Insassenerfassungseinrichtung auf. Dabei kann die Blickrichtungsinformation Koordinaten einer aktuellen Blickrichtung des Insassen repräsentieren und die Kopfhaltungsinformation Koordinaten einer aktuellen Kopfhaltung des Insassen repräsentieren. Der optische Sensor kann einer Kamera für eine Insassen- bzw. Fahrerüberwachung als Teil der Insassenerfassungseinrichtung zugeordnet sein. Auf diese Weise kann die Insassenblickinformation ohne Weiteres unter Verwendung allgemein verfügbarer Daten einer herkömmlichen Fahrerüberwachungskamera generiert werden.

Beispielsweise kann in dem Schritt des Zuordnens ein Steuerbefehl der ersten Steuereinrichtung durch ein manuelles Betätigen der ersten Steuereinrichtung erzeugt werden und/oder ein Steuerbefehl der zweiten Steuereinrichtung durch ein manuelles Betätigen der zweiten Steuereinrichtung erzeugt werden. Diese Ausführungsform des Verfahrens erlaubt dem Insassen einen einfachen sowie schnell und intuitiv auszuführenden Steuereingriff in die Einrichtung oder die weitere Einrichtung des Fahrzeugs.

Gemäß einer Ausführungsform kann das Verfahren einen Schritt des Ausgebens eines Anzeigesignals an die zu steuernde Einrichtung ansprechend auf den Schritt des Zuordnens aufweisen. Das Anzeigesignal kann ausgebildet sein, um die zu steuernde Einrichtung dem Insassen visuell und/oder optisch und/oder akustisch anzuzeigen. So kann dem Insassen ohne Weiteres eine Rückmeldung über eine aktuell gesteuerte Einrichtung gegeben werden.

Gemäß einer weiteren Ausführungsform kann in dem Schritt des Zuordnens ein Steuerbefehl eines in einem Lenkrad des Fahrzeugs integrierten Scrollrades als die erste Steuereinrichtung des Fahrzeugs der Einrichtung zugeordnet werden und/oder ein Steuerbefehl eines in eine Mittelkonsole des Fahrzeugs integrierten Drehknopfes als die zweite Steuereinrichtung des Fahrzeugs der Einrichtung zugeordnet werden. Gemäß dieser Ausführungsform kann der Insasse die Bedienung der Einrichtung oder der weiteren Einrichtung vorteilhaft komfortabel und die Fahrsicherheit verbessernd in Abhängigkeit von einer aktuellen Hand- oder Armhaltung gestalten.

Das Verfahren kann ferner einen Schritt des Bereitstellens einer zweiten Insassenblickinformation über die Schnittstelle zu der Insassenerfassungseinrichtung des Fahrzeugs aufweisen. Die zweite Insassenblickinformation kann einen Blick des Insassen auf eine zu steuernde weitere Einrichtung des Fahrzeugs repräsentieren. Entsprechend kann in dem Schritt des Zuordnens ein Steuerbefehl der ersten Steuereinrichtung und/oder ein Steuerbefehl der zweiten Steuereinrichtung unter Verwendung der zweiten Insassenblickinformation der weiteren Einrichtung zugeordnet werden, um die weitere Einrichtung wahlweise mit der ersten Steuereinrichtung oder der zweiten Steuereinrichtung zu steuern. Die zweite Insassenblickinformation kann zu einem zweiten Zeitpunkt generiert bzw. bereitgestellt werden, der zeitlich hinter dem ersten Zeitpunkt liegen kann. Gemäß dieser Ausführungsform können unter Verwendung unterschiedlicher Blickrichtungs- und Kopfhaltungsdaten des Insassen an unterschiedlichen Positionen im Fahrzeug angeordnete Einrichtungen gesteuert werden.

Gemäß einer weiteren Ausführungsform kann in dem Schritt des Zuordnens ein Steuerbefehl der ersten Steuereinrichtung und/oder ein Steuerbefehl der zweiten Steuereinrichtung einem Ersten aus einer Gruppe eines Kombiinstruments und eines zentralen Bedien- und Anzeigeelements des Fahrzeugs als der Einrichtung zugeordnet werden und/oder in dem weiteren Schritt des Zuordnens ein Steuerbefehl der ersten Steuereinrichtung und/oder ein Steuerbefehl der zweiten Steuereinrichtung einem Zweiten aus der Gruppe des Kombiinstruments und des zentralen Bedien- und Anzeigeelements des Fahrzeugs als der weiteren Einrichtung zugeordnet werden. So können zwei Einrichtungen des Fahrzeugs von zentraler Bedeutung einfach, schnell und sicher durch steuernde Blicke und Handbewegungen des Insassen bedient werden.

Der hier vorgestellte Ansatz schafft ferner eine Vorrichtung, die ausgebildet ist, um die Schritte einer Variante des hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch die Vorrichtung eine Steuerung wahlweise eines Kombiinstruments und eines Infotainmentsystems eines Fahrzeugs. Hierzu kann die Vorrichtung beispielsweise auf elektrische Signale wie einen Steuerbefehl einer ersten oder zweiten Steuereinrichtung bzw. eines ersten oder zweiten Aktors des Fahrzeugs zugreifen. Die Ansteuerung erfolgt über Aktoren wie ein Scrollrad, einen Drehknopf, einen Kippschalter einen Taster oder ein Steuerkreuz.

Ferner kann die Vorrichtung einen Steuerschalter aufweisen. Der Steuerschalter kann ausgebildet sein, um unter Verwendung einer Insassenblickinformation einen Steuerbefehl einer ersten Steuereinrichtung des Fahrzeugs einer zu steuernden Einrichtung zuzuordnen und/oder einen Steuerbefehl einer zweiten Steuereinrichtung des Fahrzeugs der zu steuernden Einrichtung zuzuordnen. So kann die Zuordnung der Steuerbefehle schnell und robust gestaltet werden.

Es wird ferner ein Fahrzeug mit einer Insassenerfassungseinrichtung und einer mit der Insassenerfassungseinrichtung gekoppelten Vorrichtung gemäß einer der oben erläuterten Ausführungsformen vorgestellt.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung eines Fahrzeugs mit einer Insassenerfassungseinrichtung gemäß einem Ausführungsbeispiel;
Fig. 2 eine Schaltlogik eines Systems der Zuordnung von Steuerbefehlen in einem Fahrzeug gemäß einem Ausführungsbeispiel;
Fig. 3 ein Ablaufdiagramm eines Verfahrens zum Zuordnen von Steuerbefehlen in einem Fahrzeug gemäß einem Ausführungsbeispiel;
Fig. 4 eine Darstellung eines Fahrzeuginnenraums mit unter Verwendung einer Vorrichtung zum Zuordnen von Steuerbefehlen steuerbaren Einrichtungen gemäß einem Ausführungsbeispiel; und
Fig. 5 eine Darstellung einer beispielhaften Steuereinrichtung gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

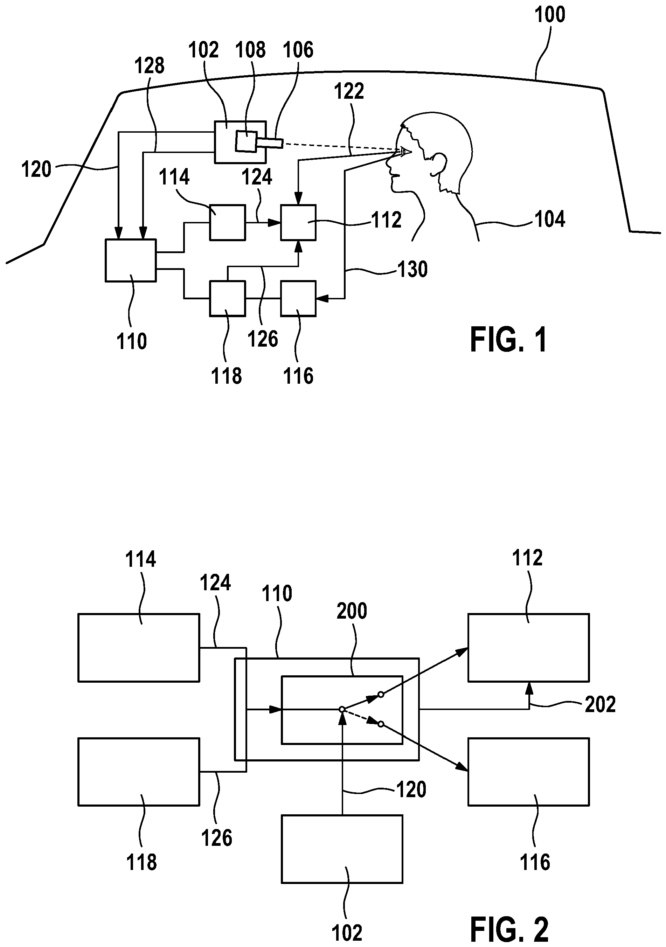

Fig. 1 zeigt eine schematische Darstellung eines Fahrzeugs 100. Bei dem Fahrzeug 100 handelt es sich um ein straßengebundenes Fahrzeug, hier einen Personenkraftwagen bzw. Pkw. Es kann sich bei dem Fahrzeug 100 auch um einen Lastkraftwagen oder ein anderes Nutzfahrzeug handeln. Das Fahrzeug 100 weist eine Insassenerfassungseinrichtung 102 zum Erfassen eines Insassen 104 - hier eines Fahrers - des Fahrzeugs 100 auf. Ein optischer Sensor 106 einer Kamera 108 der Insassenerfassungseinrichtung 102 ist zur Überwachung des Insassen 104 auf einen Kopf des Insassen 104 gerichtet. Die Fahrerüberwachungskamera 108 ist ausgebildet, um eine Blickrichtung und/oder eine Kopfhaltung - also Position und Winkel des Kopfes - des Insassen 104 beispielsweise kontinuierlich während einer Fahrt des Fahrzeugs 100 zu erfassen. Die erfassten Daten werden in einer ursprünglichen Funktion der Insassenerfassungseinrichtung 102 in einer Recheneinheit der Insassenerfassungseinrichtung 102 verarbeitet, um festzustellen, in welche Richtung der Fahrer 104 blickt und ob er seine Aufmerksamkeit auf die Straße richtet oder aber abgelenkt ist. Die Fahrerüberwachungskamera 108 ist beispielsweise direkt vor dem Fahrer 104 positioniert, beispielsweise im Kombiinstrument oder in der Lenksäule des Fahrzeugs 100.

Die in Fig. 1 beispielhaft gezeigte Fahrer- bzw. Insassenerfassungseinrichtung 102 ist in Pkws der Oberklasse häufig bereits serienmäßig verfügbar und eignet sich auch zum Einsatz beispielsweise in Bussen.

Gemäß dem hier vorgestellten Ansatz ist eine Vorrichtung 110 zum Zuordnen von Steuerbefehlen in dem Fahrzeug 100 vorgesehen. Die Vorrichtung 110 ist mit der Insassenerfassungseinrichtung 102 elektrisch leitfähig verbunden. Ferner ist die Vorrichtung 110 mit einer Einrichtung 112 und einer der Einrichtung 112 in einer Grundeinstellung zugeordneten ersten Steuereinrichtung 114 sowie mit einer weiteren Einrichtung 116 und einer der weiteren Einrichtung 116 in einer Grundeinstellung zugeordneten zweiten Steuereinrichtung 118 elektrisch leitfähig verbunden, beispielsweise über einen CAN-Bus des Fahrzeugs 100.

Je nach Ausführungsbeispiel kann die Vorrichtung 110 ein einem gemeinsamen Gehäuse mit der Insassenerfassungseinrichtung 102 untergebracht sein oder örtlich entfernt von der Insassenerfassungseinrichtung 102 im Fahrzeug 100 angeordnet sein und beispielsweise über den CAN-Bus des Fahrzeugs 100 mit der Insassenerfassungseinrichtung 102 gekoppelt sein.

In dem in Fig. 1 gezeigten Szenario blickt der Insasse 104 zu einem ersten Zeitpunkt auf die Einrichtung 112 des Fahrzeugs 100 in der Absicht, die Einrichtung 112 zu steuern bzw. eine aktuelle Einstellung der Einrichtung 112 zu ändern oder zumindest zu überprüfen. Beispielsweise handelt es sich bei der Einrichtung 112 um ein Kombiinstrument oder einen Teil eines Kombiinstruments des Fahrzeugs 100. Die Kamera 108 erfasst mittels des optischen Sensors 106 permanent Augen- und Kopfbewegungen des Insassen 104 und liefert entsprechend Blick- bzw. Kopfhaltungsdaten an eine Recheneinheit der Insassenerfassungseinrichtung 102.

Die Insassenerfassungseinrichtung 102 ist ausgebildet, um unter Verwendung einer auf den Blick- bzw. Kopfhaltungsdaten der Kamera 108 basierenden Blickrichtungsinformation und/oder Kopfhaltungsinformation eine Insassenblickinformation 120 zu generieren und über eine geeignete Schnittstelle an die Vorrichtung 110 bereitzustellen. Die Blickrichtungsinformation bzw. Kopfhaltungsinformation repräsentiert dabei beispielsweise Koordinaten einer aktuellen Blickrichtung bzw. einer aktuellen Kopfhaltung des Insassen 104. Die Insassenblickinformation 120 repräsentiert einen Blick 122 des Insassen 104 auf die zu steuernde Einrichtung 112 des Fahrzeugs 100.

Gemäß einem alternativen Ausführungsbeispiel ist die Vorrichtung 110 ausgebildet, um die Blickrichtungsinformation und/oder Kopfhaltungsinformation von der Insassenerfassungseinrichtung 102 einzulesen und die Insassenblickinformation 120 zu generieren.

Die Vorrichtung 110 ist mit ferner ausgebildet, um unter Verwendung der Insassenblickinformation 120 und ansprechend auf eine manuelle Betätigung der ersten Steuereinrichtung 114 oder der zweiten Steuereinrichtung 118 durch den Insassen 104 einen Steuerbefehl 124 der ersten Steuereinrichtung 114 bzw. einen Steuerbefehl 126 der zweiten Steuereinrichtung 118 der Einrichtung 112 zuzuordnen. Bei dem in Fig. 1 skizzierten Szenario bedeutet das, dass im Falle einer manuellen Betätigung der ersten Steuereinrichtung 114 eine in der Grundeinstellung gegebene Zuordnung erhalten bleibt und der durch die manuelle Betätigung der ersten Steuereinrichtung 114 erzeuge erste Steuerbefehl 124 standardgemäß an die Einrichtung 112 bereitgestellt wird. Im Falle einer manuellen Betätigung der zweiten Steuereinrichtung 118 durch den Insassen 104 bewirkt die Vorrichtung 110 jedoch eine Umleitung des durch die manuelle Betätigung der zweiten Steuereinrichtung 118 erzeugen zweiten Steuerbefehls 126. Dieser wird nun nicht mehr gemäß der Grundeinstellung an die weitere Einrichtung 116, sondern ebenfalls an die Einrichtung 112 bereitgestellt.

Gemäß dem hier skizzierten Konzept ermöglicht die Vorrichtung 110 es dem Insassen 104 also, die von ihm zur Steuerung anvisierte Einrichtung 112 sowohl über die erste Steuereinrichtung 114 als auch über die zweite Steuereinrichtung 118 anzusteuern, je nachdem wie es für ihn in einer augenblicklichen Lage komfortabler oder sicherer ist.

Analog ordnet die Vorrichtung 110 unter Verwendung einer zweiten Insassenblickinformation 128, die einen Blick 130 des Insassen 104 auf die weitere Einrichtung 116 repräsentiert, einen Steuerbefehl der ersten Steuereinrichtung 114 und/oder einen Steuerbefehl der zweiten Steuereinrichtung 118 der weiteren Einrichtung 116 zu, um die weitere Einrichtung 116 wahlweise mit der ersten Steuereinrichtung 114 oder der zweiten Steuereinrichtung 118 zu steuern. Den Blick 130 führt der Insasse 104 beispielsweise in zeitlichem Abstand zu dem Blick 122 aus.

Das anhand dem in Fig. 1 gezeigten Szenario vorgestellte Konzept der Zuordnung multipler Funktionen zu einer einzeigen Steuereinrichtung lässt sich auf beliebig viele Steuereinrichtungen und beliebig viele Einrichtungen im Fahrzeug 100 erweiteren.

Fig. 2 zeigt eine Schaltlogik zur Erläuterung des in Fig. 1 aufgezeigten Systems der Zuordnung von Steuerbefehlen in einem Fahrzeug gemäß einem Ausführungsbeispiel. Wie bereits im Zusammenhang mit Fig. 1 erläutert, ist die Vorrichtung 110 zum Einen mit der Insassenerfassungseinrichtung 102 und zum Anderen sowohl mit der ersten Steuereinrichtung 114 und mit der zweiten Steuereinrichtung 118 als auch mit der Einrichtung 112 und der weiteren Einrichtung 116 elektrisch leitfähig verbunden.

Bei dem in Fig. 2 gezeigten Ausführungsbeispiel wird die erste Steuereinrichtung 114 durch ein Scrollrad 114, die zweite Steuereinrichtung 118 durch einen Drehknopf 118, die Einrichtung 112 durch ein Kombiinstrument 112 und die weitere Einrichtung 116 durch ein zentrales Bedien- und Anzeigeelement 116 repräsentiert. Das Scrollrad 114 ist beispielsweise in ein Lenkrad eines Fahrzeugs integriert und typischerweise zur Steuerung von Einrichtungen des Kombiinstruments 112 ausgelegt. Der Drehknopf 118 befindet sich gemäß einem Ausführungsbeispiel an einer Mittelkonsole im Fahrzeug und ist typischerweise zur Steuerung von Einrichtungen eines Infotainmentsystems des Fahrzeugs vorgesehen. Die Ansteuerung des Infotainmentsystems erfolgt üblicherweise über das zentrale Bedien- und Anzeigeelement 116, das in Form eines Bildschirms häufig über der Mittelkonsole angeordnet ist.

Die Vorrichtung 110 umfasst einen Steuerschalter 200, der eine gemäß dem hier vorgestellten Ansatz geeignete Umleitung der von den Steuereinrichtungen 114, 118 bereitgestellten Befehle ausführt. Bei dem Steuerschalter 200 handelt es sich um elektrisches Betriebsmittel zur Umwandeln einer manuellen Betätigung in ein zur Weiterverarbeitung bestimmtes Signal.

Je nachdem, ob die zuletzt vor einer Betätigung der ersten Steuereinrichtung 114 oder der zweiten Steuereinrichtung 118 von der Insassenerfassungseinrichtung 102 an die Vorrichtung 110 bereitgestellte Insassenblickinformation 120 einen Blick des Insassen auf das Kombiinstrument 112 oder das zentrale Bedien- und Anzeigeelement 116 repräsentiert, leitet der Steuerschalter 200 von den Steuereinrichtungen 114, 118 bereitgestellte Steuerbefehle um. Beispielhaft repräsentiert in der in Fig. 2 gezeigten Schaltlogik die Insassenblickinformation 120 einen Blick des Insassen auf das Kombiinstrument 112 als letzten Blick vor einer manuellen Betätigung eines der Steuerelemente 114, 118 durch den Insassen. Der Steuerschalter 200 steuert entsprechend einer in Fig. 2 gezeigten ersten Schaltstellung einen oder mehrere Steuerbefehle 124 des Scrollrades 114 und einen oder mehrere Steuerbefehle 126 des Drehknopfes 118 zu dem Kombiinstrument 112 um.

Gemäß einem Ausführungsbeispiel stellt die Vorrichtung 110 ansprechend auf die Zuordnung der Steuerbefehle 124, 126 ein Anzeigesignal 202 an die aktuell zu steuernde Einrichtung - hier das Kombiinstrument 112 - bereit. Das Anzeigesignal 202 erzeugt ein visuelles und/oder optisches und/oder akustisches Feedback der erfolgten Zuordnung, die dem Insassen anzeigt, welche der in Fig. 2 beispielhaft gezeigten Einrichtungen 112, 116 er aktuell steuert. Vorteilhaft ist beispielsweise ein visuelles Feedback in Form einer Leuchtanzeige in oder um einen Bildschirm des Kombiinstruments 112.

Repräsentiert alternativ die Insassenblickinformation 120 oder einer weitere Insassenblickinformation zu einem späteren Zeitpunkt einen Blick des Insassen auf das zentrale Bedien- und Anzeigeelement 116 als letzten Blick vor einer manuellen Betätigung eines der Steuerelemente 114, 118 durch den Insassen, wechselt der Steuerschalter 200 aus der ersten in eine mittels Strichlinien in der Darstellung in Fig. 2 gekennzeichnete zweite Schaltstellung und steuert einen oder mehrere Steuerbefehle 124 des Scrollrades 114 und einen oder mehrere Steuerbefehle 126 des Drehknopfes 118 zu dem Bildschirm 116 des Infotainmentsystems um.

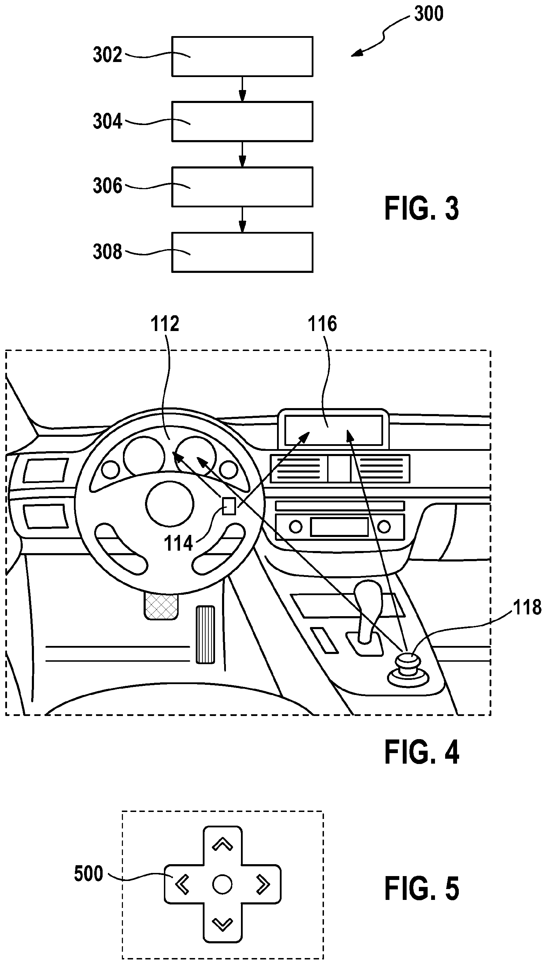

Fig. 3 zeigt ein Ablaufdiagramm eines Ausführungsbeispiels eines Verfahrens 300 zum Zuordnen von Steuerbefehlen in einem Fahrzeug. Das Verfahren 300 kann von der in den Figuren 1 und 2 gezeigten Vorrichtung zum Zuordnen von Steuerbefehlen in einem Fahrzeug ausgeführt werden.

In einem Schritt des Einlesens 302 wird über eine Schnittstelle zu einer Insassenerfassungseinrichtung des Fahrzeugs eine Insassenblickinformation eingelesen, die einen Blick eines Insassen des Fahrzeugs auf eine zu steuernde Einrichtung des Fahrzeugs repräsentiert.

In einem Schritt des Zuordnens 304 wird unter Verwendung der Insassenblickinformation ein Steuerbefehl einer ersten Steuereinrichtung des Fahrzeugs und/oder ein Steuerbefehl einer zweiten Steuereinrichtung des Fahrzeugs der Einrichtung zugeordnet, um die Einrichtung wahlweise mit der ersten Steuereinrichtung oder der zweiten Steuereinrichtung zu steuern.

In einem Schritt des Bereitstellens 306, der zu einem späteren Zeitpunkt als der Schritt des des Einlesens 302 ausgeführt wird, wird eine zweite Insassenblickinformation über die Schnittstelle zu der Insassenerfassungseinrichtung des Fahrzeugs bereitgestellt. Die zweite Insassenblickinformation repräsentiert einen Blick des Insassen auf eine zu steuernde weitere Einrichtung des Fahrzeugs.

In einem weiteren Schritt des Zuordnens 308 wird ein Steuerbefehl der ersten Steuereinrichtung und/oder ein Steuerbefehl der zweiten Steuereinrichtung unter Verwendung der zweiten Insassenblickinformation der weiteren Einrichtung zugeordnet, um die weitere Einrichtung wahlweise mit der ersten Steuereinrichtung oder der zweiten Steuereinrichtung zu steuern.

Fig. 4 zeigt eine Darstellung eines beispielhaften Fahrzeuginnenraums eines Pkws. Gezeigt ist der Fahrzeuginnenraum aus der Perspektive eines Insassen auf dem Fahrersitz des Pkw. In das Lenkrad des Pkw ist ein beispielhaftes Scrollrad 114 integriert. In seiner herkömmlichen Funktion wird das Scrollrad 114 typischerweise verwendet, um das Menü des Kombiinstruments 112 des Pkw zu steuern. Der Insasse kann das Scrollrad 114 bedienen, während er die Hände am Steuer hat. Beispielsweise kann der Insasse das Scrollrad 114 mit einem Finger bedienen, indem er es nach oben oder nach unten dreht. Ein Drehen des Scrollrades 114 erzeugt einen Steuerbefehl zum Steuern eines Bildschirms des Kombiinstruments 112.

Der Bildschirm bzw. das Bedien- und Anzeigeelement 116 eines Infotainmentsystems des Pkws wird in einem herkömmlichen Aufbau unter Verwendung eines Touch-Displays oder des Drehknopfes 118, der in die Mittelkonsole im Pkw integriert ist, gesteuert. Der Insasse kann den Drehknopf 118 zur Bedienung des Bedien- und Anzeigeelements 116 nach rechts oder links drehen. Ein Drehen des Drehknopfs 118 erzeugt einen Steuerbefehl zum Steuern des Bedien- und Anzeigeelements 116. Da das Bedien- und Anzeigeelement 116 typischerweise oberhalb der Mittelkonsole angeordnet ist, wird es auch als Head Unit 116 bezeichnet.

Gemäß dem hier vorgestellten Konzept der Zuordnung multipler Funktionen zu einem Bedienelement 114, 118 kann der Insasse, basierend darauf, auf welche Einrichtung 112, 116 er seinen Blick richtet, diese Einrichtung 112, 116 wahlweise mit dem Scrollrad 114 oder mit mit Drehknopf 118 bedienen.

Wenn der Insasse beispielsweise die Hände an Steuer hat und das Bedien- und Anzeigeelement 116 bedienen möchte, braucht er nun nicht mehr die Hände vom Steuer zu nehmen, um den Drehknopf 118 zu greifen. Er kann stattdessen das Scrollrad 114 im Lenkrad verwenden. Wenn hingegen sein rechter Arm auf der Armstütze hinter der Mittelkonsole ruht, ist es für ihn möglicherweise angenehmer, nach dem Drehknopf 118 zu greifen.

Der Insasse kann basierend auf der Blickrichtungserkennung unter Verwendung einer auf den Kopf des Insassen gerichteten Fahrerüberwachungseinrichtung das Scrollrad 114 und altnativ den Drehknopf 118 zur Steuerung beider Einrichtungen 112, 116 benutzen, wie es in der Darstellung in Fig. 4 durch von den Steuereinrichtungen 114, 118 ausgehende Richtungspfeile anschaulich illustriert ist.

Das hier vorgeschlagene neuartige Konzept kann auf so viele Einrichtungen bzw. deren Bildschirme, wie im Pkw vorhanden sind, übertragen werden. Selbstverständlich kann das vorgeschlagene Konzept auch auf Elemente angewendet werden, die keine Bildschirme aufweisen. Beispielsweise kann basierend auf einem erfassten Blick auf den Klimaanlagebereich im Pkw beispielsweise durch Drehen des Scrollrades 114 oder des Drehknopfs 118 die Temperatur im Pkw herauf- oder heruntergeregelt werden.

Gemäß einem weiteren Ausführungsbeispiel können basierend auf einem erfassten Blick auf die Spiegel im Fahrzeug unter Verwendung eines Steuerkreuzes 500 als zu verwendende Steuereinrichtung, wie es beispielhaft in Fig. 5 gezeigt ist, individuelle Stellungen aller Spiegel im Fahrzeug konfiguriert werden.

Das hierin vorgestellte Konzept kann auf alle Typen von Bedienelementen oder Eingabegeräten wie Knöpfe, Joysticks, Druckknöpfe, Schalter oder sogar auf Elemente wie die Sprachsteuerung oder die Gestenerkennung angewendet werden.

Denkbar ist es ferner, dass es sich bei den Steuereinrichtungen um "non-Displays" handeln kann, beispielsweise die Steuereinheiten der Klimaanlage im Fahrzeug oder die Außenspiegel. Auch kann ein Display in Flächen unterteilt werden und jede Fläche für sich bedient werden, abhängig auf welche der flächen der Fahrzeuginsasse blickt. Ein anderer Aspekt des hier vorgestellten Ansatzes ist auch darin zu sehen, dass eine Rückmeldung der ausgewählten Steuereinheit an den Nutzer bzw. den Fahrzeuginsassen erfolgt. Er/Sie soll wissen welches Display, welche Fläche oder welche Steuereinheit er/sie gerade bedient. Dafür kann der Hintergrund im Display bzw. der ausgewählten Steuereinheit in einer anderen Farbe erscheinen als die nicht ausgewählten Steuereinheiten bzw. Fahrzeugelemente, einen Rahmen bekommen oder ein spezielles Merkmal kann in diesem Fall angezeigt werden. Die Rückmeldung der Auswahl eines "Non-Display"-Elementes als Steuerelement kann beispielsweise über eine Lichtquelle wie eine LED geschehen. Ein weiterer Aspekt des hier vorgestellten Ansatzes, konkret im Fahrzeugkontext, kann darin gesehen werden, dass wenn der Fahrzeuginsasse wieder auf die Straße schaut, die zuletzt angesehene Display-/Flächen-/non-Display-/ oder allgemein Steuereinheit weiterhin aktiv bleibt, so dass er es weiterhin bedienen kann, ohne das Display konstant starren zu müssen. So wird der Fahrezuginsasse weniger abgelenkt sein und kann wie gewohnt lediglich mit Kontrollblicken verifizieren, dass das gewünschte Menü noch immer ausgewählt ist.

## Patentansprüche

1. Verfahren (300) zum Zuordnen von Steuerbefehlen in einem Fahrzeug (100), wobei das Verfahren (300) die folgenden Schritte aufweist:
einlesen (302) einer Insassenblickinformation (120) über eine Schnittstelle zu einer Insassenerfassungseinrichtung (102) des Fahrzeugs (100), wobei die Insassenblickinformation (120) einen Blick (122) eines Insassen (104) des Fahrzeugs (100) auf eine zu steuernde Einrichtung (112) des Fahrzeugs (100) repräsentiert; und
wahlweise zuordnen (304) eines Steuerbefehls (124) einer ersten Steuereinrichtung (114) des Fahrzeugs (100) und/oder eines Steuerbefehls (126) einer zweiten Steuereinrichtung (118) des Fahrzeugs (100) zu der Einrichtung (112) unter Verwendung der Insassenblickinformation (120), um die Einrichtung (112) wahlweise mit der ersten Steuereinrichtung (114) oder der zweiten Steuereinrichtung (118) zu steuern.

2. Verfahren (300) gemäß Anspruch 1, **gekennzeichnet durch** einen Schritt des Generierens der Insassenblickinformation (120) unter Verwendung einer Blickrichtungsinformation und/oder einer Kopfhaltungsinformation eines optischen Sensors (106) der Insassenerfassungseinrichtung (102), wobei die Blickrichtungsinformation Koordinaten einer aktuellen Blickrichtung des Insassen (104) repräsentiert und die Kopfhaltungsinformation Koordinaten einer aktuellen Kopfhaltung des Insassen (104) repräsentiert.

3. Verfahren (300) gemäß einem der vorangegangenen Ansprüche, **dadurch gekennzeichnet, dass** in dem Schritt des Zuordnens (304) ein Steuerbefehl (124) der ersten Steuereinrichtung (114) durch ein manuelles Betätigen der ersten Steuereinrichtung (114) erzeugt wird und/oder ein Steuerbefehl (126) der zweiten Steuereinrichtung (118) durch ein manuelles Betätigen der zweiten Steuereinrichtung (118) erzeugt wird.

4. Verfahren (300) gemäß einem der vorangegangenen Ansprüche, **gekennzeichnet durch** einen Schritt des Ausgebens eines Anzeigesignals (202) an die zu steuernde Einrichtung (112) ansprechend auf den Schritt des Zuordnens (304), wobei das Anzeigesignal (202) ausgebildet ist, um die zu steuernde Einrichtung (112) dem Insassen (104) visuell und/oder optisch und/oder akustisch anzuzeigen.

5. Verfahren (300) gemäß einem der vorangegangenen Ansprüche, **dadurch gekennzeichnet, dass** in dem Schritt des Zuordnens (304) ein Steuerbefehl (124) eines in einem Lenkrad des Fahrzeugs (100) integrierten Scrollrades als die erste Steuereinrichtung (114) des Fahrzeugs (100) der Einrichtung (112) zugeordnet wird und/oder ein Steuerbefehl (126) eines in eine Mittelkonsole des Fahrzeugs (100) integrierten Drehknopfes als die zweite Steuereinrichtung (118) des Fahrzeugs (100) der Einrichtung (112) zugeordnet wird.

6. Verfahren (300) gemäß einem der vorangegangenen Ansprüche, **gekennzeichnet durch** einen Schritt des Bereitstellens (306) einer zweiten Insassenblickinformation (128) über die Schnittstelle zu der Insassenerfassungseinrichtung (102) des Fahrzeugs (100), wobei die zweite Insassenblickinformation (128) einen Blick (130) des Insassen (104) auf eine zu steuernde weitere Einrichtung (116) des Fahrzeugs (100) repräsentiert, und einen weiteren Schritt des Zuordnens (308), in dem ein Steuerbefehl (124) der ersten Steuereinrichtung (114) und/oder ein Steuerbefehl (126) der zweiten Steuereinrichtung (118) unter Verwendung der zweiten Insassenblickinformation (128) der weiteren Einrichtung (116) zugeordnet wird, um die weitere Einrichtung (116) wahlweise mit der ersten Steuereinrichtung (114) oder der zweiten Steuereinrichtung (118) zu steuern.

7. Verfahren (300) gemäß Anspruch 6, **dadurch gekennzeichnet, dass** in dem Schritt des Zuordnens (304) ein Steuerbefehl (124) der ersten Steuereinrichtung (114) und/oder ein Steuerbefehl (126) der zweiten Steuereinrichtung (118) einem Ersten aus einer Gruppe eines Kombiinstruments und eines zentralen Bedien- und Anzeigeelements des Fahrzeugs (100) als der Einrichtung (112) zugeordnet wird und/oder in dem weiteren Schritt des Zuordnens (308) ein Steuerbefehl (124) der ersten Steuereinrichtung (114) und/oder ein Steuerbefehl (126) der zweiten Steuereinrichtung (118) einem Zweiten aus der Gruppe des Kombiinstruments und des zentralen Bedien- und Anzeigeelements des Fahrzeugs (100) als der weiteren Einrichtung (112) zugeordnet wird.

8. Vorrichtung (110), die eingerichtet ist, um die Schritte des Verfahrens (300) gemäß einem der vorangegangenen Ansprüche in entsprechenden Einheiten auszuführen.

9. Vorrichtung (110) gemäß Anspruch 8, **gekennzeichnet durch** einen Steuerschalter (200), der ausgebildet ist, um unter Verwendung einer Insassenblickinformation (120) einen Steuerbefehl (124) einer ersten Steuereinrichtung (114) des Fahrzeugs (100) einer zu steuernden Einrichtung (112) zuzuordnen und/oder einen Steuerbefehl (126) einer zweiten Steuereinrichtung (118) des Fahrzeugs (100) der zu steuernden Einrichtung (112) zuzuordnen.

10. Fahrzeug (100) mit einer Insassenerfassungseinrichtung (102) und einer mit der Insassenerfassungseinrichtung (102) gekoppelten Vorrichtung (110) gemäß Anspruch 8 oder 9.

11. Computerprogramm, das dazu eingerichtet ist, das Verfahren (300) gemäß einem der vorangegangenen Ansprüche auszuführen.

12. Maschinenlesbares Speichermedium, auf dem das Computerprogramm nach Anspruch 11 gespeichert ist.

## Claims

1. Method (300) for assigning control commands in a vehicle (100), wherein the method (300) has the following steps:
reading in (302) occupant eyeline information (120) via an interface to an occupant detection device (102) of the vehicle (100), wherein the occupant eyeline information (120) represents an eyeline (122) of an occupant (104) of the vehicle (100) to a device (112) of the vehicle (100) that is to be controlled; and
selectively assigning (304) a control command (124) from a first control device (114) of the vehicle (100) and/or a control command (126) from a second control device (118) of the vehicle (100) to the device (112) by using the occupant eyeline information (120), in order to control the device (112) either using the first control device (114) or using the second control device (118).

2. Method (300) according to Claim 1, **characterized by** a step of generating the occupant eyeline information (120) by using line-of-sight information and/or head-posture information from an optical sensor (106) of the occupant detection device (102), wherein the line-of-sight information represents coordinates of a current line of sight of the occupant (104) and the head-posture information represents coordinates of a current head posture of the occupant (104).

3. Method (300) according to either of the preceding claims, **characterized in that** the assigning step (304) involves a control command (124) from the first control device (114) being produced by manually operating the first control device (114) and/or a control command (126) from the second control device (118) being produced by manually operating the second control device (118).

4. Method (300) according to one of the preceding claims, **characterized by** a step of outputting an indicator signal (202) to the device (112) to be controlled in response to the assigning step (304), wherein the indicator signal (202) is designed to visually and/or optically and/or audibly indicate the device (112) to be controlled to the occupant (104).

5. Method (300) according to one of the preceding claims, **characterized in that** the assigning step (304) involves a control command (124) from a scroll wheel, which is integrated in a steering wheel of the vehicle (100), as the first control device (114) of the vehicle (100) being assigned to the device (112) and/or a control command (126) from a rotary knob, which is integrated in a centre console of the vehicle (100), as the second control device (118) of the vehicle (100) being assigned to the device (112).

6. Method (300) according to one of the preceding claims, **characterized by** a step of providing (306) second occupant eyeline information (128) via the interface to the occupant detection device (102) of the vehicle (100), wherein the second occupant eyeline information (128) represents an eyeline (130) of the occupant (104) to a further device (116) of the vehicle (100) that is to be controlled, and a further assigning step (308), in which a control command (124) from the first control device (114) and/or a control command (126) from the second control device (118) is assigned to the further device (116) by using the second occupant eyeline information (128), in order to control the further device (116) either using the first control device (114) or using the second control device (118).

7. Method (300) according to Claim 6, **characterized in that** the assigning step (304) involves a control command (124) from the first control device (114) and/or a control command (126) from the second control device (118) being assigned to a first item from a group comprising a combination instrument and a central operator-control and indicator element of the vehicle (100) as the device (112) and/or the further assigning step (308) involves a control command (124) from the first control device (114) and/or a control command (126) from the second control device (118) being assigned to a second item from the group comprising the combination instrument and the central operator-control and indicator element of the vehicle (100) as the further device (112).

8. Apparatus (110) configured to carry out the steps of the method (300) according to one of the preceding claims in applicable units.

9. Apparatus (100) according to Claim 8, **characterized by** a control switch (200) designed to use occupant eyeline information (120) to assign a control command (124) from a first control device (114) of the vehicle (100) to a device (112) to be controlled and/or to assign a control command (126) from a second control device (118) of the vehicle (100) to the device (112) to be controlled.

10. Vehicle (100) having an occupant detection device (102) and an apparatus (110) according to Claim 8 or 9 that is coupled to the occupant detection device (102).

11. Computer program configured to carry out the method (300) according to one of the preceding claims.

12. Machine-readable storage medium on which the computer program according to Claim 11 is stored.

## Revendications

1. Procédé (300) d'affectation d'instructions de commande dans un véhicule (100), dans lequel le procédé (300) comprend les étapes suivantes :
lire (302) une information de vision d'occupant (120) par l'intermédiaire d'une interface avec un dispositif de détection d'occupant (102) du véhicule (100), dans lequel l'information de vision d'occupant (120) représente une vision (122) d'un occupant (104) du véhicule (100) vers un dispositif (112) à commander du véhicule (100) ; et
affecter sélectivement (304) une instruction de commande (124) d'un premier dispositif de commande (114) du véhicule (100) et/ou une instruction de commande (126) d'un deuxième dispositif de commande (118) du véhicule (100) au dispositif (112) en utilisant l'information de vision d'occupant (120) pour commander sélectivement le dispositif (112) à l'aide du premier dispositif de commande (114) ou du deuxième dispositif de commande (118).

2. Procédé (300) selon la revendication 1, **caractérisé par** une étape consistant à générer l'information de vision d'occupant (120) en utilisant une information de direction de vision et/ou une information de posture de tête provenant d'un capteur optique (106) du dispositif détection d'occupant (102), dans lequel l'information de direction de vision représente des coordonnées d'une direction de vision actuelle de l'occupant (104) et l'information de posture de tête représente des coordonnées d'une posture de tête actuelle de l'occupant (104).

3. Procédé (300) selon l'une des revendications précédentes, **caractérisé en ce que**, lors de l'étape d'affectation (304), une instruction de commande (124) du premier dispositif de commande (114) est générée par un actionnement manuel du premier dispositif de commande (114) et/ou une instruction de commande (126) du deuxième dispositif de commande (118) est générée par un actionnement manuel du deuxième dispositif de commande (118) .

4. Procédé (300) selon l'une des revendications précédentes, **caractérisé par** une étape consistant à délivrer un signal d'indication (202) au dispositif (112) à commander en réponse à l'étape d'affectation (304), dans lequel le signal d'indication (202) est conçu pour indiquer visuellement et/ou optiquement et/ou acoustiquement le dispositif (112) à commander à l'occupant (104).

5. Procédé (300) selon l'une des revendications précédentes, **caractérisé en ce que**, lors de l'étape d'affectation (304), une instruction de commande (124) d'une molette de défilement intégrée à un volant du véhicule (100) est affectée au dispositif (112) en tant que premier dispositif de commande (114) du véhicule (100) et/ou une instruction de commande (126) d'un bouton tournant intégré à un console centrale du véhicule (100) est affectée au dispositif (112) en tant que deuxième dispositif de commande (118) du véhicule (100).

6. Procédé (300) selon l'une des revendications précédentes, **caractérisé par** une étape consistant à fournir (306) une deuxième information de vision d'occupant (128) par l'intermédiaire de l'interface avec le dispositif de détection d'occupant (102) du véhicule (100), dans lequel la deuxième information de vision d'occupant (128) représente une vision (130) de l'occupant (104) vers un autre dispositif (116) à commander du véhicule (100), et par une autre étape d'affectation (308), lors de laquelle une instruction de commande (124) du premier dispositif de commande (114) et/ou une instruction de commande (126) du deuxième dispositif de commande (118) est affectée au deuxième dispositif de commande (116) en utilisant la deuxième information de vision d'occupant (128), pour commander sélectivement l'autre dispositif (116) à l'aide du premier dispositif de commande (114) ou du deuxième dispositif de commande (118).

7. Procédé (300) selon la revendication 6, **caractérisé en ce que**, lors de l'étape d'affectation (304), une instruction de commande (124) du premier dispositif de commande (114) et/ou une instruction de commande (126) du deuxième dispositif de commande (118) est affectée en tant que dispositif (112) à un premier élément d'un groupe constitué par un tableau de bord et un organe central de commande et d'affichage du véhicule (100), et/ou **en ce que**, lors de l'autre étape d'affectation (308), une instruction de commande (124) du premier dispositif de commande (114) et/ou une instruction de commande (126) du deuxième dispositif de commande (118) est affectée en tant qu'autre dispositif (112) à un deuxième élément du groupe constitué par le tableau de bord et l'organe central de commande et d'affichage du véhicule (100).

8. Dispositif (110) conçu pour mettre en œuvre les étapes du procédé (300) selon l'une des revendications précédentes dans des unités correspondantes.

9. Dispositif (110) selon la revendication 8, **caractérisé par** un commutateur de commande (200) conçu, par utilisation d'une information de vision d'occupant (120), pour affecter une instruction de commande (124) d'un premier dispositif de commande (114) du véhicule (100) à un dispositif (112) à commander et/ou pour affecter une instruction de commande (126) d'un deuxième dispositif de commande (118) du véhicule (100) au dispositif (112) à commander.

10. Véhicule (100) comportant un dispositif de détection d'occupant (102) et un dispositif (110) selon la revendication 8 ou 9 couplé au dispositif de détection d'occupant (102).

11. Programme d'ordinateur conçu pour mettre en œuvre le procédé (300) selon l'une des revendications précédentes.

12. Support de stockage lisible par machine sur lequel est stocké le programme d'ordinateur selon la revendication 11.
